# EUROPEAN PATENT SPECIFICATION

(11) **EP 1 251 017 B1**
(45) Date of publication and mention of the grant of the patent: **20.07.2005**
(21) Application number: 02006877.1
(22) Date of filing: 26.03.2002
(51) Int. Cl.: B60D 1/60

(54) **Protective cap for a ball-hitch**
Schutzkappe für eine Kugelkopfkupplung
Capot de protection pour une rotule d'attelage

(30) Priority: 14.04.2001 DK 200100611
(43) Date of publication of application: 23.10.2002
(73) Proprietor: Interforst K/S, 5610 Assens (DK)
(72) Inventor: Toxvaerd-Larsen, Hans Lauritz, 5610 Assens (DK)
(74) Representative: Nielsen, Leif

(56) References cited:
- EP-A- 0 685 406
- EP-A- 0 937 593
- US-A- 3 596 926
- US-A- 5 037 122

## Description

The present invention concerns a protective cap for ball hitches on an automobile draw device, including a ball disposed at the end of a drawbar, the opposite end of which is secured to a drawing vehicle, and where the protective cap is constituted by a partly open, hollow item, the cavity of which is shaped for accommodating at least the ball, and which cavity is delimited by a wall in the form of a skirt, the lower periphery of which delimiting the mouth of the cavity, and where the lower periphery of the skirt includes a holder ring connected thereto to be passed over and by the ball.

It is well known that such caps are used for covering balls in periods of time where the ball hitch is not used, with the purpose of protection against contact with the normally greasy and dirty ball head. It is also well-known that most users has the experience that the loose cap is prone to being lost when there is need for it, and on this background, naturally a desire for letting the cap being more permanently connected to the draw gear has appeared, typically by a flexible wire/chain connection to the drawbar connected with the ball. Such connections have, however, cost-increasing effect, and by the invention it is view to indicate an extremely simple and cheap solution to the problem concerned.

In DE 299 03 479 U1 is indicated a protective cap where there is provided a non-rigid connection at the lower rim of the skirt and projecting from its periphery, in the end of which and in extension of which is found a holder ring which by mounting of the protective cap is passed down over the ball after which the cap is mounted by bending the non-rigid connection. Hereby is achieved that the cap is held fast in the holder ring when this is not used, while hanging loosely down from the lowermost point of the drawbar, whereby it is not lost. However, in this hanging position, the protective cap will be exposed to fouling by dirt etcetera being churned up during driving. Furthermore, the loose suspension will imply with great certainty that the protective cap hits against the drawbar and other parts of the draw device, resulting in noise emission as well it may inadvertently catch objects in the hanging position, which may imply that the holder ring breaks and the cap is lost. The loose suspension will, though over a long period of time, result in wear on the holder ring causing weakening of this and maybe breakage with the loss of the cap as a consequence. But, with the indicated protective cap and with the preceding reservations, it is achieved that it will not be lost when not in use, and that it is always in vicinity of the place of use though it may need cleaning before it is mounted on the ball head.

In DE 299 22 917 U1 there is indicated a cap for a trailer hitch and comprising a holder flange where the holder flange has an opening through which the ball is pressed for a once for all mounting on the drawbar of the drawing gear. The protective cap furthermore has conical shape, and the periphery is provided with an annular groove ring whereby there is achieved a better grip of the protective cap in connection with dismounting this from its position firmly wedged on the ball head. This protective cap may also suffer from the same drawback as the previously mentioned cap, namely that this, in the dismounted state off the ball head, can hang down freely with the above described disadvantages.

Common to the above caps with holder flanges is that the holder flange is connected via a non-rigid connection between the periphery and the rim of the skirt, at the lower end of which and in extension thereof there is found a holder ring which by mounting on the protective cap is firstly pressed down over the ball after which the protective cap is placed upon the ball. This means that for the making of the protective cap, use is made of the material for the holder flange as well as for the connecting element between this and the periphery of the cap.

It is the purpose of the invention to indicate a cap of the kind indicated in the introduction which is material saving in production and which in a simple way eliminates the disadvantages by the prior art protective caps.

This purpose is achieved by adapting the protective caps as indicated in the characterising part of claim 1. Hereby is achieved that the centre of the ring formed by removing the material in the lower part of the skirt is situated substantially close to or at the centre axis of the skirt.

Removal of the wall above the holder ring may consist in making a slit in the lowermost part of the skirt above the holder ring as indicated in claim 2.

Hereby is achieved, that the ring member below the slit is only connected with the overlying cap part through a peripheral section along the lower end of the skirt which is sufficient to stabilise the ring member in its normal position, but which also is able to be utilised as an integrated hinge connection between the ring member and the cap. By this embodiment of the cap according to the invention, no extra material is used for establishing the ring member and the connection between this and the periphery of the skirt of the cap part, whereby the cap according to the invention may be made with less material consumption that prior art caps.

A further advantage is that by the making of the slit it is possible to take off the cap and then fold the ring member down from the upper cap part, after which the ring member may separately be passed over the ball with the upper cap part as a projecting attachment, down to a simply supported parking position on the drawbar itself, where the user may just leave the cap until the time comes for taking it up for renewed ordinary use, where the cap is placed over the ball on the automotive drawing gear.

When the holder ring over at least one short connective peripheral length is resiliently connected with a short peripheral length of the lower rim of the skirt as indicated in claim 3, it is achieved that the relevant parking place is right at hand when the cap is taken off and the ring member eo ipso seeks resiliently back towards its normal position. Hereby, the cap as a whole will be wedged firmly onto the drawbar so that it will not in any way give rise to rattling. Furthermore, the cap disposed in this way can be held firmly in its position on the vertically oriented part of the drawbar, immediately under the ball head, and will thus not hang down below the underside of the drawbar with the risk of hitching objects on the surface which the drawing vehicle moves across with consequential rending of the ring and loss of the protective cap. Furthermore, the cap placed in the said position will be oriented with the opening facing outwards whereby dirt may hardly be collected in the cavity of the cap.

Without abandoning other embodiments, a suitable embodiment of the cap will be that it is made as a injection moulded plastic item with an upper semi-spherical top and a cylindrical skirt extending down therefrom, the centre axis of which coinciding with the centre axis of the semi-circular top, where, in the mounted position of the cap, the skirt is extending down past the ball and an additional length for covering the entirely, or at least a part of, the upper end part of the largely vertical section of the drawbar to which the ball is fastened, and where at the lower periphery, the protective cap comprises the holder ring connected therewith, the centre of which being located in extension of the centre axis, as indicated in claim 4.

Hereby is achieved a protective cap shaped as traditional caps, however with the difference that its holder ring and the position of it has the above mentioned advantages.

The user will thus recognise the drawbar as a really logical place of storage for the cover, and there will thus be little incitement for choosing another place, i.e. the problem with the disappearing cover will in practice be at least largely eliminated under application of the cap according to the invention, and for the same low price as conventional tires or plastic.

With the purpose of avoiding the notch action in connection with the deflection of the cap when it is placed wedged on the vertical part of the drawbar, the slit close to the connection between the ring and the lower part of the skirt may be wider as indicated in claim 5.

With the purpose of achieving a suitable production of the protective cap according to the invention, the holder ring may be moulded in one piece with the cap as indicated in claim 6.

With the purpose of ensuring wedging of the protective cap on the drawbar, when this is not placed on the ball, the short connecting peripheral length between the skirt and holder ring may be designed as an integrated elastic hinge connection as indicated in claim 7. Hereby is achieved that the holder ring will always resiliently seek back towards its normal position, and the cap will thereby be wedged firmly on the drawbar so that it in no way gives rise to rattling.

With the purpose of facilitating attaching the cap on the automotive draw gear by passing the holder ring over and past the ball, the holder ring may be shaped so that it displays slightly greater internal diameter than the internal diameter of the skirt of the cap and the holder ring. Hereby is achieved that the holder ring may be passed down over the ball without any problems.

With the intention of ensuring that the holder ring has a certain strength and with regard to the fact that its internal diameter is greater than the skirt of the cap and the holder ring, the holder ring may advantageously display greater external diameter than the external diameter of the lower rim of the cap skirt and the holder ring. Hereby, an increase material thickness is achieved and thereby an increased strength of the holder ring.

With the purpose of further ensuring easy attachment of the cap on the automotive draw gear, the holder ring may comprise a chamfering as indicated in claim 10.

With the purpose of achieving a suitable resilient action at the fastening points of the holder ring, the short peripheral lengths connecting it with the skirt may be reduced in material thickness as indicated in claim 11. By simultaneously establishing several peripheral lengths connecting the holder ring and the skirt, there is thus achieved a suitable and evenly distributed spring action/load at deflection of the ring member from the upper cap part.

Moreover, for enabling securing of a certain flexibility and compensation of varying ball sizes, the holder ring may be discontinued, and the ends of the holder ring may be connected with the skirt via two short spaced periphery lengths as indicated in claim 12.

With the purpose of ensuring a suitable economical shape of the protective cap, the outer periphery of the holder ring may be rounded as mentioned in claim 13, and furthermore, opposite the connecting points with the skirt, the holder ring may comprise a projection that will facilitate mounting and dismounting of the cap on the automotive draw gear.

With the object of ensuring that the cap remains in its position, when this has been put on the ball head of the automotive draw gear, the internal wall side of the cavity comprises at least one projection immediately under the tangent point of a ball accommodated in it in such a way that the upper end of the ball is in contact with the internal wall side, as indicated in claim 15. Hereby is intended a kind of click-function, where the said projection is pressed past the tangent points of the ball head, which is possible as a consequence of the flexibility of the plastic material, whereby the protective cap is held in its position upon the ball head.

The invention is explained more closely in the following with reference to the drawing where:
- Fig. 1: is a side view of an embodiment of a protective cap with integrated holder ring according to the invention,
- Fig. 2: is a side view of an automotive draw gear,
- Fig. 3: is a side view of the cap shown in Fig. 1 placed on the drawbar of the draw gear.,
- Fig. 4: is a side view of a second embodiment of a cap according to the invention,
- Fig. 5: is a side view of the cap shown in Fig. 4 mounted on a draw gear,
- Fig. 6: is a side view of a further embodiment of a cap according to the invention,
- Fig. 7: is a top view of the same,
- Fig. 8: is a sectional view along the line AA in the cap shown in Fig. 7,
- Fig. 9: is a rear view along the line BB of the cap shown in Fig. 7, and
- Fig. 10: is a side view of the cap shown in Figs. 6 - 9 mounted on a draw gear.

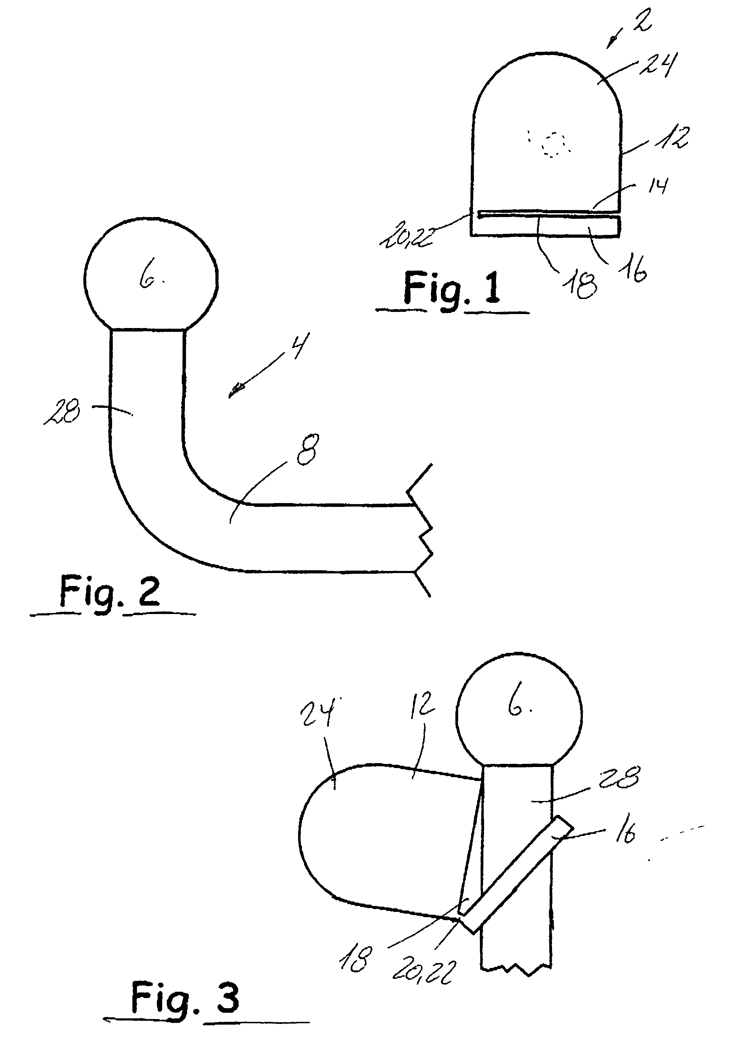

The embodiment of a protective cap 2 according to the invention shown in Fig. 1 is as a whole of ordinary embodiment as an injection moulded item in a suited plastic material. The cap 2 has semi-spherical top 24 from the periphery of which there is a downwardly extending, cylindrical skirt 12 connected thereto. The skirt 12 is, however, according to the invention made with an almost completely annular slit 18 dividing the cap 2 into a cap part comprising the semi-spherical top 24 and the skirt 12 and a lower ring member 16. The slit 18 is discontinued along a short length 20, along the lower periphery of the skirt 12 defined by the slit 18, where the length has a peripheral extension of few centimetres. This is sufficient for the ring member 16 to normally taking up its shown position in which it only continues the skirt 12 downwards.

The cap is intended for being placed on an automotive draw gear 4, an example being shown Fig. 2, where this comprises a ball head 6 disposed at the top of the mainly vertical section 28 of one end of a drawbar 8, the other end of which is not shown, but in a known way secured to a drawing vehicle (not shown).

In Fig. 3 is shown how the cap 2 according to the invention may be placed on the vertically oriented section 28 of the drawbar 8 when the draw gear 4 is in use, where a not shown coupling part is placed upon the ball 6. By choosing a suitable plastic material, the area 20, where the skirt 12 and the cap 12,24 are connected (i.e. where the material is not removed), will also constitute an integrated hinge that will make possible a resilient pivoting down of the ring member 16 from the cap part, whereby the cap 2 may be brought to take up the position shown in Fig. 3, in which the ring member 16 may be passed down over the ball head 6 with the cap part 24,12 in an outwardly projecting position. Hereby, the entire cap body may be moved down, e.g. to the position shown, on the mainly vertically oriented part 28 of the drawbar 8 of the draw gear, where it is completely removed from the ball are, however so that the opening of the cap is oriented inclining downwards so that its cavity 10 is not dirtied, and so that the cap body is pressed against the drawbar 28 with sufficient force so that it is not loose and gives rise to rattling noises during the driving; and wherefrom it may easily be taken up again when it is to be used again for its ordinary purpose, namely where the ball 6 is accommodated in the cavity 10 in the cap 2.

By the deflection of the hinge 20, a certain narrowing of the ring member 16 may occur, so that this may encounter some resistance at the passage of the ball 6. This may be overcome by forming the lower end of the skirt 12 with slightly increased diameter so that also the ring member 16 will have further increased diameter compared with the ball 6.

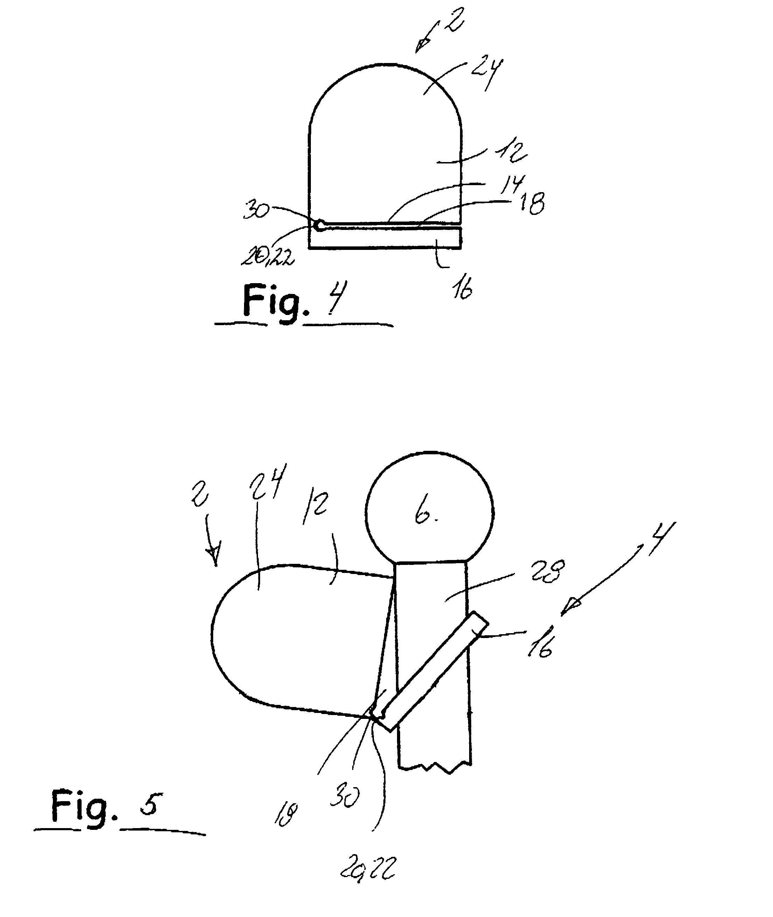

At the deflection of the ring member 18 from the cap part 12,24, the hinge connection 20 between the ring 18 and the skirt 12 will be exposed to notch action which may result in breakage of the connection 20. In Figs. 4 and 5 are shown a cap 2 according to the invention, where the notch action is attempted counteracted by establishing a broader slit 18 in area bordering the sides 30 of the hinge connection 20.

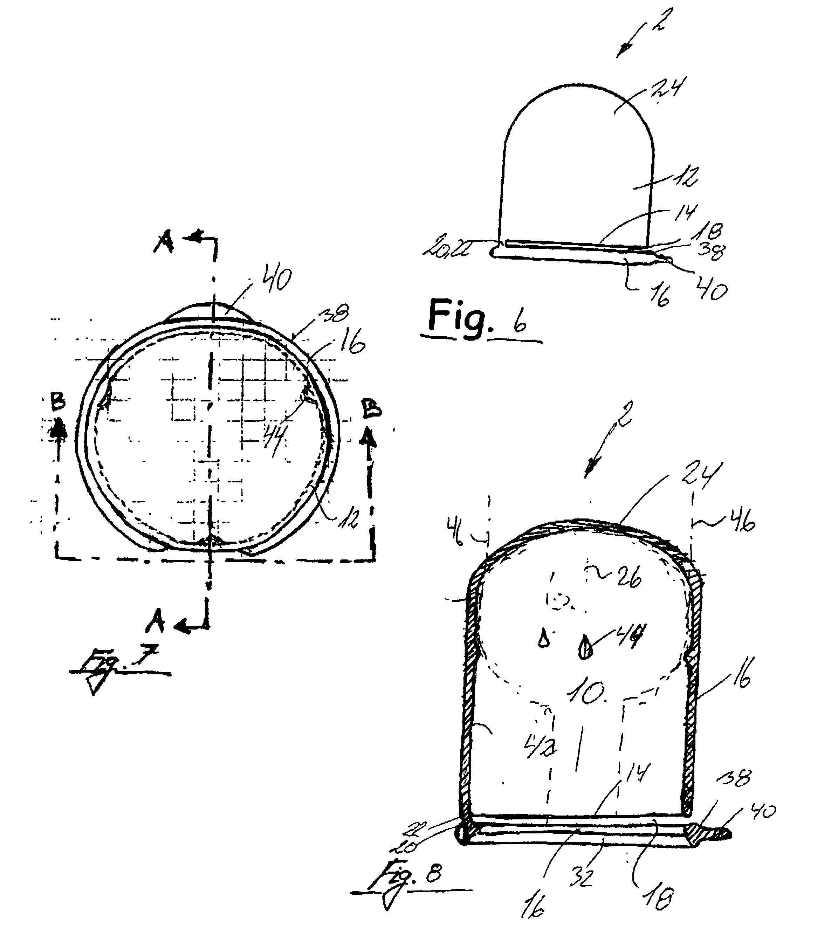

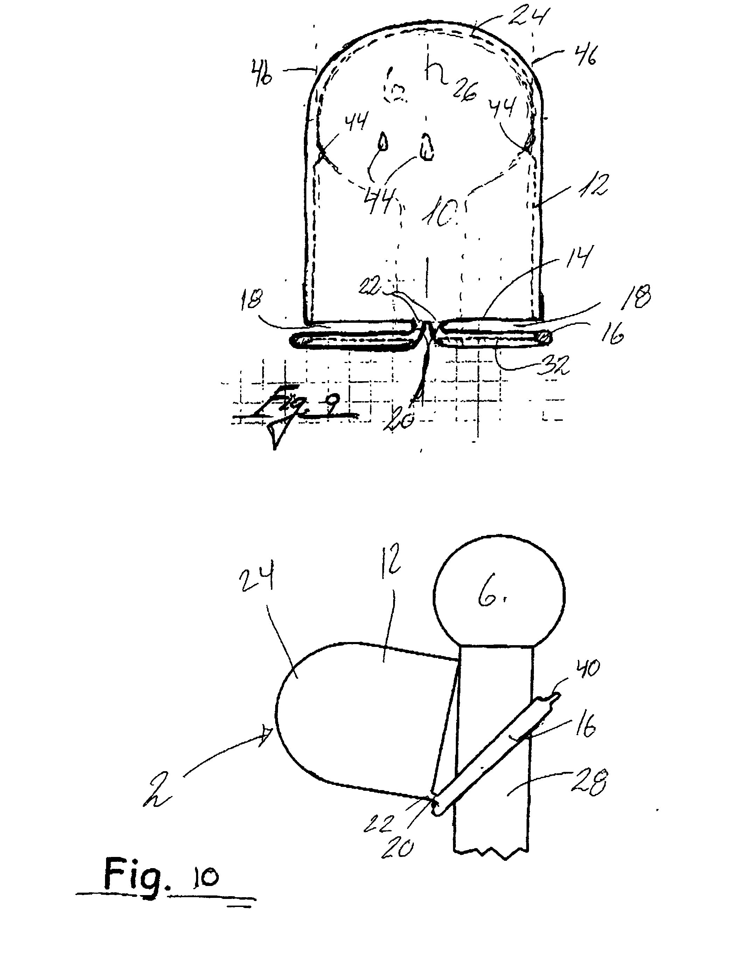

A further, much preferred embodiment of the cap according to the invention is indicated in Figs. 6 - 10. The cap 2 in its basic form is made up as previously indicated but comprises another structure of the holder ring 16 and of its connection 20 for short peripheral lengths 22 at the lower rim 14 of the skirt 12.

As it particularly appears from Figs. 6 - 8, the holder ring 16 comprises a projection 40 at the outer periphery 38 and at the opposite side of its connections 20, but the lower rim 14 of the skirt 12. The projection 40 serves as finger grip whereby it is easier to mount and dismount the cap 2 by moving the holder ring 16 back over and past the ball head 6.

Further appearing from Figs. 6, 7 and 9, the holder ring has an external diameter being greater than the external diameter of the skirt 12. On the other hand, the internal diameter of the holder ring 16 is also greater than the internal diameter of the cylindrical skirt 12. Hereby is achieved that it becomes easier to pass the holder ring over the ball 6.

The holder ring 16 furthermore has a chamfering 32 extending between its side facing the centre axis 26 of the cap 16 and the underside 34 of it. The effect of this is that it becomes easier to pass the holder ring over the ball head 6 in connection with mounting and dismounting the protective cap 2.

The cap 2 furthermore comprises projections 44 at the inner wall side 42 of the cavity 10 and extending between the tangent point 46 and to a level just under this of a ball 6 with standard size accommodated in the cavity 10 with the top end of the ball surface in contact with the internal wall side 42. Hereby is achieved that the cap may be retained in its position upon the ball head as this is "clicked" on by yielding of the material of which the cap 2 is made.

In principle, the cap body may alternatively be made with a ring member 18 projecting downward or outward from its lower edge, with slightly larger diameter than the ball 10, but this will make the manufacture and a possible packing of the caps more expensive as well as the mould tool for making the caps will be appreciably more expensive. In a moulding tool, the slit 2 may be formed by using a pair of transversely moving jaws, however, it is also a possibility that it may be formed by cutting operation in a fully moulded cap body.

### List of designations:

2. protective cap
3. automotive draw gear (4)
6. ball head
8. drawbar
10. cavity
12. skirt
14. lower periphery of skirt (12)
16. holder ring
18. slitting of the lowermost of the wall/skirt (12) above the holder ring (16)
20. at least one short connecting peripheral length on the holder ring (16)
22. at least one short peripheral length of the lower rim (14) of the skirt (12)
24. upper semi-spherical top
26. centre axis for the upper semi-spherical top (24) and the skirt (12)
28. vertically oriented section of the drawbar (8)
30. sides of the connection (18,20) (is wider)
32. bevelling (32) on the holder ring extending between the side facing the centre axis
(26) of the cap and the underside (34) of the holder ring (16) 34. the underside of the holder ring (16)
36. the ends (38) of the holder ring (16)
38. the outer periphery of the holder ring (rounded)
40. projection on the holder ring (16)
42. internal wall side of the cavity (10)
44. projection on the internal wall side (42)
46. tangent point of a ball head (6)

## Claims

1. A protective cap (2) for ball hitches on an automobile draw device (4), including a ball (6) disposed at the end of a drawbar (8), the opposite end of which is secured to a drawing vehicle, and where the protective cap (2) is constituted by a partly open, hollow item, the cavity (10) of which is shaped for accommodating at least the ball (6), and which cavity is delimited by a wall in the form of a skirt (12), the lower periphery (14) of which delimiting the mouth of the cavity, and where the lower periphery (14) of the skirt includes a holder ring (16) connected thereto to be passed over and by the ball (6), **characterised in that** the holder ring (16) constitutes the lowermost annular part of the skirt (12) and is formed by the wall/skirt (12) having a section removed on the larger part of the circumference of the lowermost part of the skirt (12) above the holder (16).

2. A cap (2) according to claim 1, **characterised in that** the holder ring (16) is formed by making a slit (18) in the lower part of the wall/skirt (12) above the holder ring (16), the slit (18) extending over the greater part of the circumference of the lowermost ring area (14) of the skirt (12).

3. A cap (2) according to claim 1 or 2, **characterised in that** the holder ring (16) over at least one short connective peripheral length (20) is resiliently connected with a short peripheral length (22) of the lower rim (14) of the skirt (12).

4. A cap (2) according to any of claims 1 - 3, **characterised in that** the item constituting the protective cap (2) is made as an injection moulded plastic object with an upper semi-spherical top (24) and a cylindrical skirt (12) extending down therefrom, the centre axis of which (26) coinciding with the centre axis of the semi-circular top (24), where, in the mounted position of the cap, the skirt (12) is extending down past the ball (6) and an additional length for covering the entirely, or at least a part of, the upper end part of the largely vertical section (28) of the drawbar (8) to which the ball (6) is fastened, and where at the lower periphery (14), the protective cap (2) comprises the holder ring (16) connected therewith, the centre of which being located in extension of the centre axis (26).

5. A cap (2) according to any of claims 1 - 4, **characterised in that** the slit (18) between the overlying cap section (12,24) and the holder ring (16) formed by the slit (18) is broader right at the sides (30) of the connection.

6. A cap (2) according to any of claims 1 - 5, **characterised in that** the holder ring (16) is moulded in one piece with the protective cap (2).

7. A cap (2) according to any of claims 1 - 6, **characterised in that** the short connecting peripheral length (20) is made as an integrated, resilient hinge connection.

8. A cap (2) according to any of claims 1 - 7, **characterised in that** the holder ring (16) displays slightly greater inner diameter than the inner diameter of the skirt (12) of the cap above the holder ring.

9. A cap (2) according to any of claims 1 - 8, **characterised in that** the holder ring (16) displays slightly greater outer diameter than the outer diameter of the lower rim (14) of the skirt (12) of the cap above the holder ring (16).

10. A cap (2) according to any of claims 1 - 9, **characterised in that** the holder ring (16) has a chamfering (32) extending between its side facing the centre axis (26) of the cap and the underside (34) of the holder ring (16).

11. A cap (2) according to any of claims 1-10, **characterised in that** the holder ring (16) has reduced material thickness over the short peripheral length/s (20) connecting it with the skirt (12).

12. A cap (2) according to any of claims 1 - 11, **characterised in that** the holder ring (16) is not continuous, and that the ends (36) are connected with the skirt (12) via two short, spaced peripheral lengths (20).

13. A cap (2) according to any of claims 1 - 12, **characterised in that** the outer periphery (38) of the holder ring is rounded.

14. A cap (2) according to any of claims 1 - 13, **characterised in that** the holder ring (16) in an area opposite the points (20) connecting with the skirt (12) comprises a projection (40).

15. A cap (2) according to any of claims 1-14, **characterised in that** the internal wall side (42) of the cavity (10) comprises at least one projection (44) immediately under the tangent point (46) of a ball (6) accommodated in it in such a way that the upper end of the ball (6) is in contact with the internal wall side (42).

## Patentansprüche

1. Schutzkappe (7) für Kugelzughaken an einer Kraftfahrzeug-Zugvorrichtung (4), die eine Kugel (6) umfasst, die am Ende einer Zugstange (8) angeordnet ist, deren gegenüberliegendes Ende an einem Zugfahrzeug befestigt ist, wobei die Schutzkappe (2) durch ein teilweise offenes hohles Element gebildet ist, dessen Hohlraum (10) so geformt ist, dass es wenigstens die Kugel (6) aufnehmen kann, wobei der Hohlraum durch eine Wand in Form einer Glocke (12) begrenzt ist, dessen unterer Umfang (14) die Mündung des Hohlraums begrenzt, wobei der untere Umfang (14) der Glocke einen Haltering (16) enthält, der mit ihr verbunden ist und über die Kugel (6) und an der Kugel vorbei bewegt werden kann, **dadurch gekennzeichnet, dass** der Haltering (16) den untersten ringförmigen Teil der Glocke (12) bildet und durch die Wand/Glocke (12) gebildet ist und einen Abschnitt besitzt, der vom größeren Teil des Umfangs des untersten Teils der Glocke (12) über dem Halter (16) entfernt ist.

2. Kappe (2) nach Anspruch 1, **dadurch gekennzeichnet, dass** der Haltering (16) durch Herstellen eines Schlitzes (18) im unteren Teil der Wand/Glocke (12) über dem Haltering (16) gebildet ist, wobei sich der Schlitz (18) über den größeren Teil des Umfangs des untersten Ringbereichs (14) der Glocke (12) erstreckt.

3. Kappe (2) nach Anspruch 1 oder 2, **dadurch gekennzeichnet, dass** der Haltering (16) wenigstens auf einer kurzen Verbindungsumfangslänge (20) mit einer kurzen Umfangslänge (22) des unteren Randes (14) der Glocke (12) elastisch verbunden ist.

4. Kappe (2) nach einem der Ansprüche 1-3, **dadurch gekennzeichnet, dass** das die Schutzkappe (2) bildende Element aus einem Spritzguss-Kunststoffgegenstand gebildet ist, der ein oberes halbkugelförmiges Oberteil (24) und eine zylindrische Glocke (12), die sich hiervon nach unten erstreckt, besitzt, wobei die Mittelachse (26) der Glocke mit der Mittelachse des halbkreisförmigen Oberteils (24) übereinstimmt, wobei in der angebrachten Position der Kappe die Glocke (12) sich an der Kugel (6) vorbei nach unten erstreckt und mit einer zusätzlichen Länge den gesamten weitgehend vertikalen Abschnitt (28) der Zugstange (8), an der die Kugel (6) befestigt ist, oder wenigstens einen Teil hiervon abdeckt, wobei die Schutzkappe (2) am unteren Umfang (14) den mit ihr verbundenen Haltering (16) aufweist, dessen Zentrum sich in der Verlängerung der Mittelachse (26) befindet.

5. Kappe (2) nach einem der Ansprüche 1-4, **dadurch gekennzeichnet, dass** der Schlitz (18) zwischen dem darüberliegenden Kappenabschnitt (12, 24) und dem durch den Schlitz (18) gebildeten Haltering (16) auf Seiten der Verbindung (30) breiter ist.

6. Kappe (2) nach einem der Ansprüche 1-5, **dadurch gekennzeichnet, dass** der Haltering (16) einteilig mit der Schutzkappe (2) gegossen ist.

7. Kappe (2) nach einem der Ansprüche 1-6, **dadurch gekennzeichnet, dass** die kurze Verbindungsumfangslänge (20) aus einer einteiligen, elastischen Scharnierverbindung hergestellt ist.

8. Kappe (2) nach einem der Ansprüche 1-7, **dadurch gekennzeichnet, dass** der Haltering (16) einen geringfügig größeren Innendurchmesser besitzt als der Innendurchmesser der Glocke (12) der Kappe über dem Haltering.

9. Kappe (2) nach einem der Ansprüche 1-8, **dadurch gekennzeichnet, dass** der Haltering (16) einen etwas größeren Außendurchmesser zeigt als der Außendurchmesser des unteren Randes (14) der Glocke (12) der Kappe über dem Haltering (16).

10. Kappe (2) nach einem der Ansprüche 1-9, **dadurch gekennzeichnet, dass** der Haltering (16) eine Fase (32) besitzt, die sich von seiner der Mittelachse (26) der Kappe zugewandten Seite zu der Unterseite (34) des Halterings (16) erstreckt.

11. Kappe (2) nach einem der Ansprüche 1-10, **dadurch gekennzeichnet, dass** der Haltering (16) über der bzw. den kurzen Umfangslänge(n) (20), die ihn mit der Glocke (12) verbindet bzw. verbinden, eine verringerte Materialdicke besitzt.

12. Kappe (2) nach einem der Ansprüche 1-11, **dadurch gekennzeichnet, dass** der Haltering (16) unterbrochen ist und dass die Enden (36) mit der Glocke (12) über zwei kurze, beabstandete Umfangslängen (20) miteinander verbunden sind.

13. Kappe (2) nach einem der Ansprüche 1-12, **dadurch gekennzeichnet, dass** der äußere Umfang (38) des Halterings abgerundet ist.

14. Kappe (2) nach einem der Ansprüche 1-13, **dadurch gekennzeich**n e t, dass der Haltering (16) in einem Bereich gegenüber den Punkten (20), an denen er mit der Glocke (12) verbunden ist, einen Vorsprung (40) aufweist.

15. Kappe (2) nach einem der Ansprüche 1-14, **dadurch gekennzeichnet, dass** die Innenwandseite (42) des Hohlraums (10) wenigstens direkt unter dem Tangentialpunkt (46) einer Kugel (6), die in ihm aufgenommen ist, einen Vorsprung (44) aufweist, so dass das obere Ende der Kugel (6) mit der Innenwandseite (42) in Kontakt ist.

## Revendications

1. Capot de protection (2) pour les rotules d'attelage sur un crochet de traction d'un véhicule (4), comportant une rotule (6) disposée à l'extrémité d'une barre de traction (8), dont l'extrémité opposée est fixée à un véhicule de traction, et le capot de protection (2) étant constitué par un élément creux, partiellement ouvert, dont la cavité (10) est formé pour accommoder au moins la rotule (6), et dont la cavité est délimitée par une paroi sous forme d'une jupe (12), dont la périphérie inférieure (14) délimite une ouverture de la cavité, et la périphérie (14) inférieure da la jupe comporte un anneau de support (16) lié à celui-ci pour être passé au-dessus, et par la rotule (6), **caractérisé en ce que** l'anneau de support (16) constitue la partie annulaire inférieure de la jupe (12) et est formé par la paroi/la jupe (12) ayant une section enlevée sur la partie plus grande de la circonférence de la partie inférieure de la jupe (12) au-dessus du support (16).

2. Capot (2) selon la revendication 1, **caractérisé en ce que** l'anneau de support est formé en réalisant une fente (18) dans la partie inférieure de la paroi/jupe (12) audessus de l'anneau de support (16), la fente (18) s'étendant sur la partie plus grande de la circumférence de la zone d'anneau inférieure (14) de la jupe (12).

3. Capot (2) selon la revendication 1 ou 2, **caractérisé en ce que** l'anneau de support (16) sur au moins une longueur périphérique liante courte (20) est lié flexiblement à une longueur périphérique courte (22) du rebord inférieur (14) de la jupe (12).

4. Capot (2) selon l'une quelconque des revendications 1 à 3, **caractérisé en ce que** l'élément constituant le capot de protection (2) est réalisé comme un élément plastique moulé par injection avec un sommet demi-sphérique supérieur (24) et une jupe cylindrique (12) s'étendant vers le bas, dont l'axe central (26) coïncidant avec l'axe central du sommet demi-sphénque (24), où, dans la position montée du capot, la jupe (12) s'étend vers la bas en passant la rotule (6) et une longueur additionnelle pour couvrir entièrement ou au moins une partie de la partie d'extrémité supérieure de la section largement verticale (28) de la barre de traction (8) à la quelle la rotule (6) est fixée, et où sur la périphérie inférieure (14), le capot de protection (2) comporte un anneau de support (16) lié à celui-ci, dont le centre étant situé dans l'extension de l'axe central (26).

5. Capot (2) selon l'une quelconque des revendications 1 à 4, **caractérisé en ce que** la fente (18) entre la section du capot susjacente (12, 24) et l'anneau de support (16) formé par la fente (18) est plus large juste sur les côtés (30) de la liaison.

6. Capot (2) selon l'une quelconque des revendications 1 à 5, **caractérisé en ce que** l'anneau de support (16) est moulé en une seule pièce avec le capot de protection (2).

7. Capot (2) selon l'une quelconque des revendications 1 à 6, **caractérisé en ce que** la longueur périphérique liante courte (20) est réalisé comme une liaison de charnière resiliente.

8. Capot (2) selon l'une quelconque des revendications 1 à 7, **caractérisé en ce que** l'anneau de support (16) présente un diamètre intérieur un peu plus grand que le diamètre intérieur de la jupe (12) du capot au-dessus de l'anneau de support.

9. Capot (2) selon l'une quelconque des revendications 1 à 8, **caractérisé en ce que** l'anneau de support (16) présente un diamètre extérieur un peu plus grand que le diamètre extérieur du rebord inférieur (14) de la jupe (12) du capot au-dessus de l'anneau de support (16).

10. Capot (2) selon l'une quelconque des revendications 1 à 9, **caractérisé en ce que** l'anneau de support (16) possède un chanfreinage (32) s'étendant entre sa face vers l'axe de centre (26) du capot et la face inférieure (34) de l'anneau de support (16).

11. Capot (2) selon l'une quelconque des revendications 1 à 10, **caractérisé en ce que** l'anneau de support (16) a une épaisseur de matière réduite sur la/les longueur(s) périphérique(s) courte(s) (20) le reliant à la jupe (12).

12. Capot (2) selon l'une quelconque des revendications 1 à 11, **caractérisé en ce que** l'anneau de support (16) n'est pas continu et que les extrémités (36) sont liées avec la jupe (12) par deux longueurs périphériques écartées courtes (20).

13. Capot (2) selon l'une quelconque des revendications 1 à 12, **caractérisé en ce que** la périphérie extérieure (38) de l'anneau de support est arrondie.

14. Capot (2) selon l'une quelconque des revendications 1 à 13, **caractérisé en ce que** l'anneau de support (16) dans une zone opposée aux points (20) de liaison avec la jupe (12) comporte une projection (40).

15. Capot (2) selon l'une quelconque des revendications 1 à 14, **caractérisé en ce que** la paroi interne (42) de la cavité (10) comporte au moins une projection (44) immédiatement sous le point de tangence (46) de la rotule (6) y logée dans une telle manière que l'extrémité supérieure de la rotule (6) est en contact avec la paroi interne (42).
